# EUROPÄISCHE PATENTANMELDUNG

(11) **EP 4 631 897 A1**
(43) Veröffentlichungstag der Anmeldung: **15.10.2025**
(21) Anmeldenummer: 25169067.3
(22) Anmeldetag: 08.04.2025
(51) Int. Cl.: B65G 57/24, B65G 59/02, B65G 61/00

(54) **SYSTEM UND VERFAHREN ZUM BILDEN/AUFLÖSEN EINER PALETTENLAGE**

(30) Priorität: 10.04.2024 DE 102024110018
(71) Anmelder: Ro-Ber Industrieroboter GmbH, 59174 Kamen (DE)
(72) Erfinder: Middelhoff, Claus, 59368 Werne (DE)
(74) Vertreter: Witte, Weller & Partner Patentanwälte mbB

(57) **Zusammenfassung**

Es werden offenbart ein System und ein Verfahren zum Bilden bzw. Auflösen einer vollständigen Ladungsträger-Lage (16) aus einer Vielzahl von einzelnen, insbesondere heterogenen, Packeinheiten (12), das aufweist: eine Vielzahl von FTF (22); und eine Steuerung (24), die eingerichtet ist: jeder der Packeinheiten (12) der Lage (16) eines der FTF (22) zuzuordnen; für jede der Packeinheiten (12) der Lage (16) eine Packeinheiten-spezifische Position (36) basierend auf einem vorab für die Lage (16) festgelegten Lagenmuster (34) zu bestimmen; und jedem der FTF (22) die Packeinheiten-spezifische Position (36) als eine End/Start-Position eines FTF-spezifischen Fahrwegs vorzugeben, so dass jede der Packeinheiten (12) der Lage (16), durch das jeweils zugeordnete FTF (22), an die bzw. von der Packeinheiten-spezifischen Position (36) bewegt wird, wenn die Lage (16) gebildet bzw. aufgelöst wird.

## Beschreibung

Die vorliegende Offenbarung betrifft ein intralogistisches, roboterbasiertes System und Verfahren zum Bilden und/oder Auflösen einer vollständigen Ladungsträgerlage, wobei die Lage aus einer Vielzahl von einzelnen, insbesondere heterogenen, Packeinheiten gebildet ist bzw. wird. Die vorliegende Offenbarung betrifft insbesondere eine roboterbasierte lagenweise Palettierung und/oder Depalettierung der Packeinheiten.

Ein Palettierer ist ein Roboter, um Packeinheiten automatisiert auf Ladungsträgern (Paletten unterschiedlicher Größen) zusammenzufassen. Für diese Aufgabe werden häufig vier- oder sechsachsige Industrieroboter eingesetzt. Es gibt grundsätzlich verschiedene Arten von Palettierern, wie z.B. Knickarmroboter, Lagenpalettierer, Linearroboter oder auch Portalroboter. Lagenpalettierer packen schicht- bzw. lagenweise komplette Lagen einer Palettenladung auf eine Palette. Ein exemplarischer Lagenpalettierer LP ist in der US 5 540 545 A1 gezeigt, wo (homogene) Packeinheiten über Stetigförderer SF (z.B. Rollenförderer RF und Bandförderer BF) angedient, mit Drehtischen DT ggf. gedreht und mit Schiebern S vom Stetigförderer SF auf eine Palette P geschoben und dort zeilen- bzw. reihenweise gesammelt werden, um eine vollständige Lage zu bilden, vgl. Fig. 7. Ein weiterer Zeilen- bzw. Lagenpalettierer ist in der US 4 593 517 A gezeigt.

Lagenpalettierer können als Portalpalettierer ausgebildet sein. Portalpalettierer sind Portalroboter die drei Linearachsen aufweisen, so dass der auf einem Gestell stehende Roboter vollständig durch einen kubischen (Arbeits-)Raum bewegt werden kann. Vollportale stehen auf vier Füßen, Halbportale stehen auf zwei Füßen. Ein Portalroboter kann eine Palettierzelle definieren. Eine Palettierzelle ist eine besonders kompakte, modular aufgebaute sowie standardisierte und dadurch kostengünstige Roboterzelle zur vollautomatischen Palettierung von Packeinheiten. Die Zelle beinhaltet den Palettierroboter samt Greifer (Lastaufnahmemittel, LAM), einen Palettierplatz, eine Zuführfördertechnik ZF für die Produkte und gegebenenfalls auch eine Palettenfördertechnik PFT für den vollautomatischen An- und Abtransport der Paletten P. Weitere optionale Komponenten sind ein Palettenmagazin PM, ein Zwischenlagenmagazin ZLM (Trennkartons) oder eine Kameratechnik. Die Greifertechnik ist an das jeweilige Produkt angepasst. (Quelle: Wikipedia zu "Palettierer", Stand: 19.03.2024).

Des Weiteren sind fahrerlose Transportsysteme (FTS) bekannt, die aus fahrerlosen Transportfahrzeugen (FTF), die auch autonome mobile Roboter (AMR) genannt werden, gebildet werden. FTF bzw. AMR sind Roboter, die sich in ihrer Umgebung selbstständig bewegen und agieren können.

Das Fraunhofer-Institut hat unter der Bezeichnung "LoadRunner" (eingetragene Marke) ein FTF mit hoher Sortierleistung entwickelt, siehe Pressemitteilung des Fraunhofer-Instituts vom 15.09.2020 mit dem Titel "Formel 1 auf dem Hallenboden", das mittels hochverteilter künstlicher Intelligenz und Kommunikation über 5G ein Hochgeschwindigkeitsfahrzeug in der Schwarmrobotik darstellt. Der LoadRunner kann sich hochdynamisch im Schwarm organisieren und sich bei Bedarf sogar für Transportaufträge zusammenkoppeln. Im Verbund können mehrere Fahrzeuge durch Kopplung auch große und sperrige Teile bewegen. Die WO 2007 / 011 871 A1 (nachfolgend kurz WO' 871 A1 genannt) zeigt bereits die Idee, mehrere FTF zusammenzukoppeln. Insbesondere zeigt die WO' 871 A1: i.) eine (Shop-optimierte) Palettenladung durch logisches Andienen einzelner Packeinheiten mittels eines (einzigen) FTF aufzubauen bzw. zu bilden (vgl. dort Fig. 4) sowie ii) mehrere Fahrzeuge zum gemeinsamen Transportieren einer überdimensionierten Packeinheit (vgl. dort Fig. 11) oder einer vollständigen Palettenladung (vgl. dort Fig. 12 und 19) zusammenzukoppeln.

Die EP 3 909 894 A1 beschreibt gemäß ihrem Titel eine Einrichtung, ein System und ein Verfahren zur Lagerung und Kommissionierung von Gegenständen.

Die DE 10 2018 105 614 A1 beschreibt gemäß ihrem Titel ein Blocklager, ein fahrerloses Transportsystem und Ladungsträger.

Die DE 10 2018 109 559 A1 beschreibt gemäß ihrem Titel eine Stückgutbehandlungsanlage und ein Verfahren zur Handhabung von Stückgütern und/oder Packhilfsmitteln.

Es ist eine Aufgabe der vorliegenden Offenbarung, ein verbessertes System und Verfahren zum Bilden bzw. Auflösen einer vollständigen Ladungsträger-Lage aus einer Vielzahl von einzelnen, insbesondere (schwach) heterogenen, Packeinheiten vorzusehen. Insbesondere soll das Bilden/Auflösen der Lage schnell, einfach und ohne den Einsatz von viel Hardware folgen.

Diese Aufgabe wird gelöst durch ein System zum Bilden bzw. Auflösen einer vollständigen Ladungsträger-Lage aus einer Vielzahl von einzelnen, insbesondere heterogenen, Packeinheiten, das aufweist: eine Vielzahl von (frei und individuell verfahrbaren) FTF; und eine Steuerung, die eingerichtet ist: jeder der Packeinheiten der Lage (mindestens) eines der FTF zuzuordnen; für jede der Packeinheiten der Lage eine Packeinheiten-spezifische Position basierend auf einem vorab für die Lage festgelegten Lagenmuster zu bestimmen; und jedem der FTF die Packeinheiten-spezifische Position als eine End/Start-Position eines FTF-spezifischen Fahrwegs vorzugeben, so dass jede der Packeinheiten der Lage, durch das jeweils zugeordnete FTF, an die bzw. von der Packeinheiten-spezifischen Position bewegt wird, wenn die Lage gebildet bzw. aufgelöst wird.

Anstatt der herkömmlich verwendeten Stetigförderer werden zur Bildung bzw. Auflösung einer Ladungsträger-Lage Unstetigförderer eingesetzt, die die Ladungsträger-Lage flexibel bilden bzw. auflösen können. Das System hat eine hohe Leistung, da sich die FTF in alle Richtungen bewegen und insbesondere drehen (Ausrichtung) können und da die FTF schnell vorab zu Untereinheiten (z.B. in eine linke und eine rechte Palettenhälfte) gruppiert werden können. Die Packeinheiten können einfach orientiert werden, indem die FTF entsprechend bewegt werden. Drehtische können zur Ausrichtung entfallen. Kippeinrichtungen können entfallen.

Die Lage kann als Ganzes gehandhabt werden. Die Handhabung einer ganzen Lage ist eine Standardaufgabe im intralogistischen Umfeld. Bevor ein Roboter eine vollständige Lage greifen kann, um sie auf einer Palette abzusetzen, muss die Lage in einem vorgegebenen Lagenbild (Packmuster bzw. Lagenmuster) formiert werden. In Abhängigkeit vom Aufbau der Lage (z.B. nur zeilenweise, versetzt/verschachtelt, mit oder ohne Abstände dazwischen, etc.) kann der Aufwand für die Zusammenführung der Packeinheiten unterschiedlich groß sein. Dem Palettierungsroboter werden komplette Lagen angedient, so dass die Packeinheiten nicht einzeln gegriffen werden müssen (Zeitersparnis). Die Leistung des Palettierungsroboters erhöht sich. Das Gleiche gilt für Depalettierungsroboter.

Bei der Depalettierung einer vollständigen Lage vereinfacht sich eine nachfolgende Vereinzelung der Packeinheiten. Die Packeinheiten können mittels der FTF einzeln bewegt, beliebig orientiert und schnell an unterschiedliche Zielorte gebracht werden.

Das System weist vorzugsweise einen Palettier-/Depalettier-Roboter auf.

Der Palettier- und Depalettiervorgang sind automatisiert und müssen nicht manuell ausgeführt werden. Die Lage kann als Ganzes bewegt werden. Ein individuelles Umsetzen der Packeinheiten einer Lage ist nicht erforderlich.

Vorzugsweise ist ein Lastaufnahmemittel des Palettier/Depalettier-Roboters eingerichtet, alle Packeinheiten der Lage gleichzeitig (umfänglich) zu greifen.

Ein einzelnes Umsetzen der Packeinheiten ist nicht erforderlich. Es wird Zeit gespart. Die Palettierung und Depalettierung kann mit einer höheren Leistung durchgeführt werden, insbesondere weil das vorgeschaltete Zusammenführen bzw. das nachgeschaltete Vereinzeln an einem anderen Ort, nämlich auf dem Fahrweg der FTF, erfolgt.

Vorzugsweise ist der Palettier/Depalettier-Roboter ein Portalroboter.

Ein Portalroboter hat den Vorteil, dass er einen großen Arbeitsraum hat, innerhalb dessen sein Lastaufnahmemittel beweglich ist. Im Gegensatz zu Knickarmrobotern ist ein Verhältnis zwischen einer Standfläche und einer Aktionsfläche des Roboters bedeutend besser. Der Portalroboter bietet ausreichend Raum, eine Gruppe von FTF, die die Lage aufnimmt oder abgibt, gleichzeitig mit dem Ladungsträger innerhalb des Arbeitsraums aufzunehmen, von dem die Lage abgehoben oder auf den die Lage abgesetzt wird.

Vorzugsweise umfasst das System also ferner einen Abführ/Zuführ-Förderer für den Ladungsträger, der durch einen Arbeitsraum des Palettier/Depalettier-Roboters hindurch verläuft, wobei der Arbeitsraum ferner einen Bereich einschließt, innerhalb dem die Vielzahl der FTF (gleichzeitig) positionierbar ist, um die Lage abzugeben bzw. aufzunehmen.

Vorzugsweise weist das System ferner ein Lager und/oder eine Produktion auf, wo die Packeinheiten der Lage durch die FTF abgeholt werden bzw. wohin die Packeinheiten der Lage gebracht werden, wobei vorzugsweise das Lager und/oder die Produktion entfernt zum Palettier/Depalettier-Roboter angeordnet sind.

Die FTF sind in der Lage, große Entfernungen schnell zu überbrücken. Während des Transports können sich die Packeinheiten z.B. einfach überholen, indem die FTF z.B. beschleunigt und/oder verlangsamt bewegt werden, um so eine gewünschte Sequenzierung (Reihenfolgebildung) am Zielort zu erzielen.

Eine Materialflusssteuerung kann vereinfacht werden, im besten Fall kann auf einen Materialflussrechner vollkommen verzichtet werden, weil der Materialfluss durch das jeweilige FTF selbst geregelt wird, wobei insbesondere nur die Start- und Endpunkte der Wege vorgegeben werden. Die Wegfindung erfolgt durch die FTF selbst.

Alternativ ist die Steuerung ferner eingerichtet, jeden der FTF-spezifischen Fahrwege (vollständig) vorab zu bestimmen.

Die Steuerung umfasst in diesem Fall ein Routenplanungsmodul für die FTF. Auch ein Kollisionsvermeidungsmodul kann umfasst sein. Die Steuerung allein bestimmt die Fahrwege der FTF, so dass die Lagenbildung und Lagenauflösung höchst priorisiert erfolgt. Die Rechenbelastung der Fahrzeuge ist in diesem Fall gering.

Vorzugsweise ist die Steuerung ferner eingerichtet, das Lagenmuster zum Bilden der Lage aus den Packeinheiten (vorab) festzulegen.

In diesem Fall umfasst die Steuerung auch einen Packmuster-Generator und kann somit unabhängig von dem Lager- und Kommissioniersystem betrieben werden.

Vorzugsweise ist ein Fußabdruck von jeder der Packeinheiten der Lage grösser oder gleich einem Fußabdruck des oder der zugeordneten FTF.

Auf diese Weise werden Kollisionen zwischen den FTF vermieden, insbesondere bei der Lagenbildung. Die Packeinheiten können dicht an dicht, d.h. insbesondere ohne Abstand dazwischen, gemäß der Lagenformation angeordnet werden.

Die Aufgabe wird ferner gelöst durch ein Verfahren zum Bilden bzw. Auflösen einer vollständigen Ladungsträger-Lage aus einer Vielzahl von einzelnen, insbesondere heterogenen, Packeinheiten, wobei das Verfahren, das insbesondere das System gemäß der vorgehend beschriebenen Art aufweist, die Schritte aufweist: Vorsehen einer Vielzahl von FTF, der Vielzahl von Packeinheiten der Lage und eines vorab für die Lage festgelegten Lagenmusters, wobei eine Anzahl der FTF insbesondere größer oder gleich einer Anzahl der Packeinheiten der Lage ist; Zuordnen von einem der FTF zu jeder der Packeinheiten der Lage, wobei insbesondere jeder der Packeinheiten der Lage ein anderes der FTF zugeordnet ist; Bestimmen einer Packeinheiten-spezifischen Position für jede der Packeinheiten basierend auf dem Lagenmuster; und Vorgeben der Packeinheiten-spezifischen Position als eine End/Start-Position eines FTF-spezifischen Fahrwegs für jedes der zugeordneten FTF, wobei jede der Packeinheiten der Lage, durch das jeweils zugeordnete FTF, an die bzw. von der Packeinheiten-spezifischen Position bewegt wird, während die Lage gebildet bzw. aufgelöst wird.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Offenbarung zu verlassen.

Ausführungsbeispiele der Offenbarung sind in den Zeichnungen dargestellt und werden in der nachfolgenden Beschreibung näher erläutert. Es zeigen:

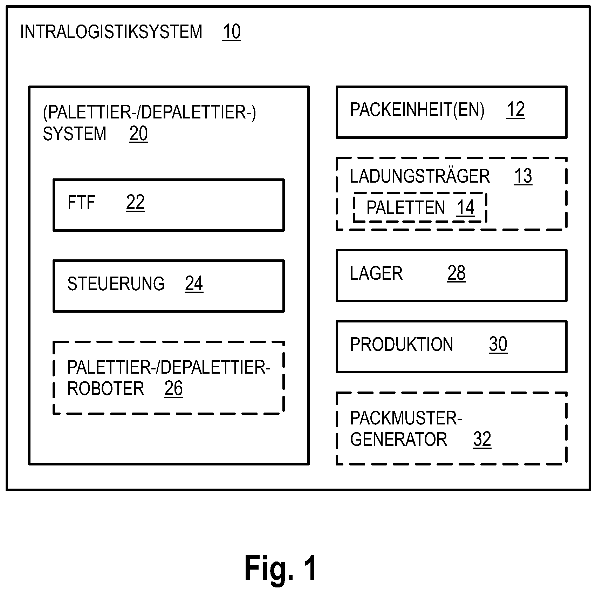

- Fig. 1: ein Blockdiagramm eines Intralogistiksystems einschließlich eines Palettier/Depalettier-Systems;

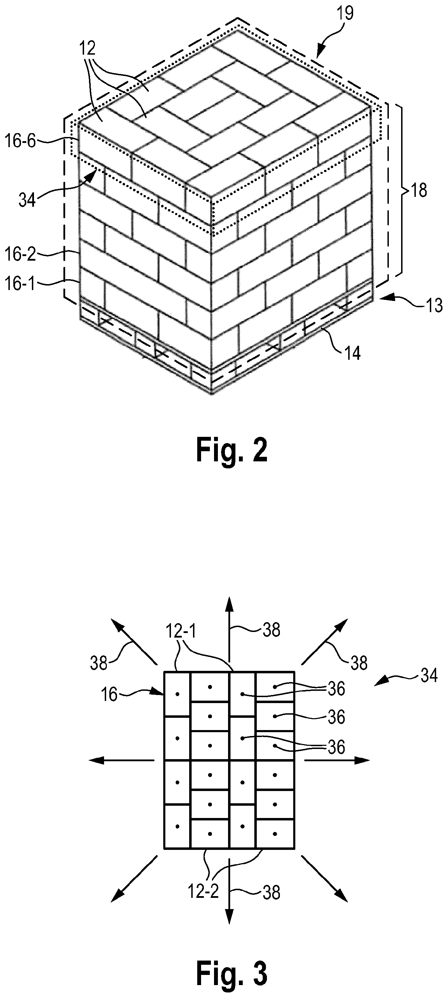

- Fig. 2: eine perspektivische Ansicht einer beladenen Palette;
- Fig. 3: ein schematisches Lagenmuster;

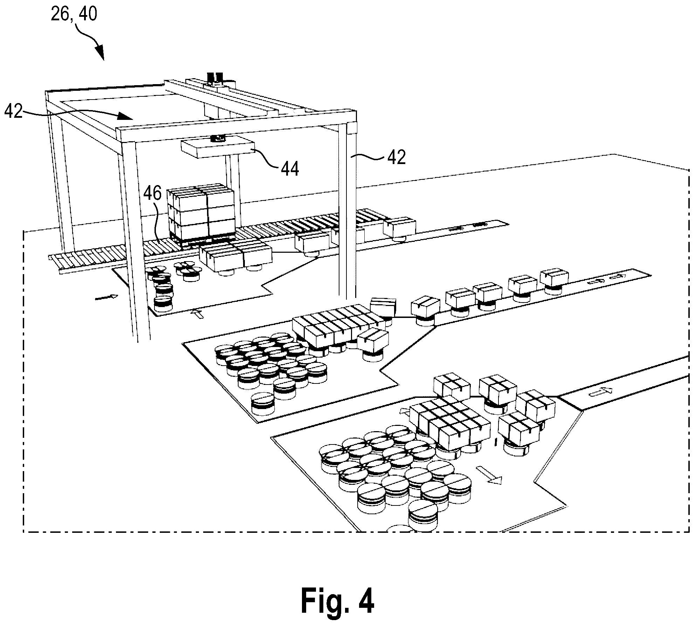

- Fig. 4: eine perspektivische Ansicht eines Palettier/Depalettier-Systems;

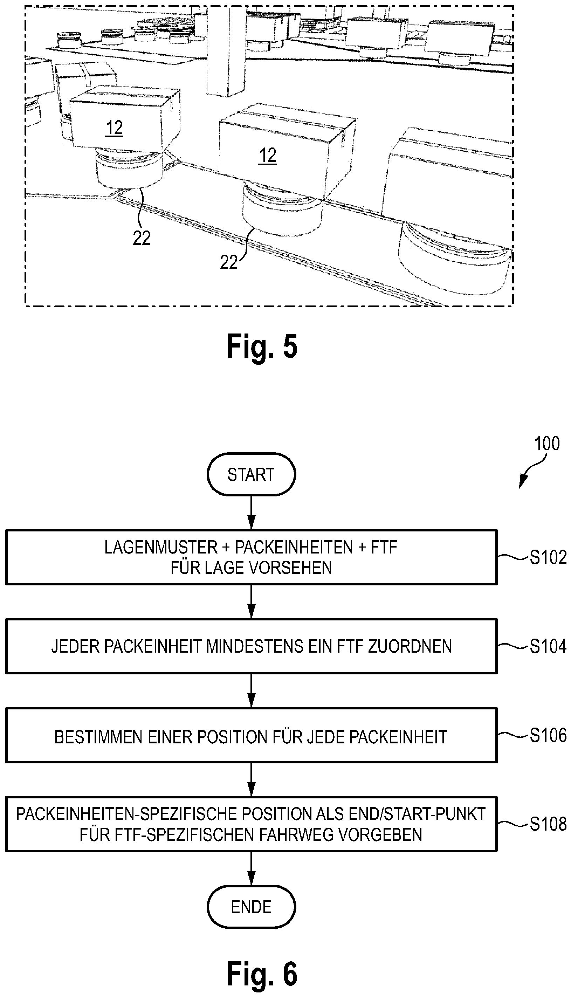

- Fig. 5: eine Detailansicht der Fig. 4;
- Fig. 6: ein Flussdiagramm eines Verfahrens zum Bilden/Auflösen einer vollständigen Ladungsträger-Lage; und

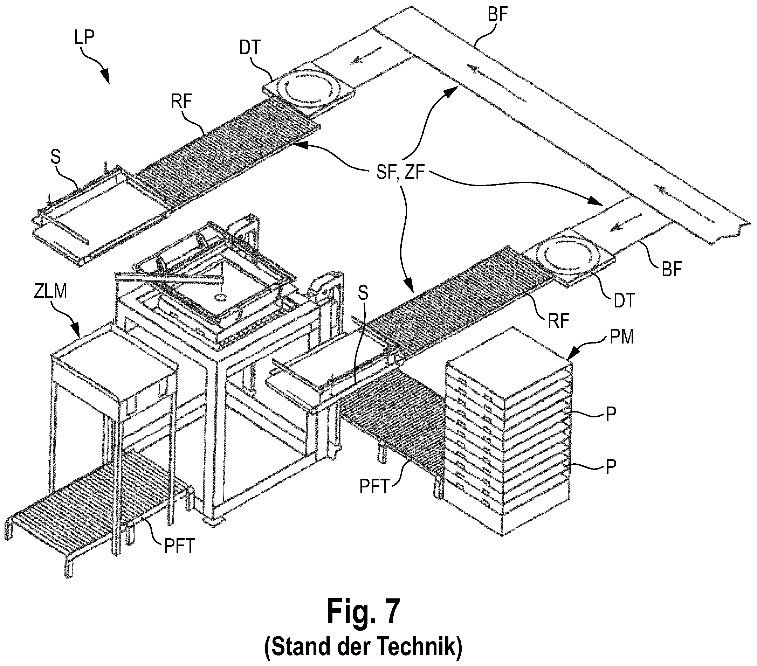

- Fig. 7: eine Palettiervorrichtung gemäß dem Stand der Technik.

In der vorliegenden Offenbarung umfasst der Begriff "Intralogistik" allgemein logistische Material- und Warenflüsse innerhalb eines Betriebsgeländes, insbesondere innerhalb eines Betriebsgebäudes. Der Begriff Intralogistik wurde definiert, um eine Abgrenzung zum Warentransport außerhalb eines Betriebs zu schaffen, der z.B. durch eine Spedition erfolgt. Das "Forum Intralogistik" im "Verband Deutscher Maschinen- und Anlagenbauer" definiert den Begriff "Intralogistik" als die Organisation, Steuerung, Durchführung und Optimierung des innerbetrieblichen Waren- und Materialflusses, der Informationsströme sowie des Warenumschlags in Industrie, Handel oder öffentlichen Einrichtungen.

In der vorliegenden Offenbarung wird unter dem Begriff "Kommissionierung" das Zusammenstellen einer kundenspezifischen Bedarfsmenge aus einem Sortiment aus mehreren Artikel- bzw. Lagereinheitentypen verstanden. Die Kommissionierung beschreibt also eine Kommissionszusammenstellung gemäß einem Kundenauftrag (kurz "Auftrag"), d.h. eine Entnahme von Teilmengen größerer Lagereinheiten aus einem Lager und deren Zusammenführung und Bereitstellung für einen Versand an den Kunden. Als Quelle kann auch eine Produktion dienen.

Fig. 1 zeigt ein Blockdiagramm eines vollautomatischen intralogistischen Systems 10, das zum Kommissionieren von Packstücken bzw. Packeinheiten 12 (z.B. Getränkekisten) eingerichtet sein kann, die gemäß Kunden- bzw. Kommissionieraufträgen aus einem Sortiment, aus z.B. einem Lager 28 und/oder einer Produktion 30, zu vereinzeln oder versandfertig zu machen sind. Das System 10 der vorliegenden Offenbarung kann z.B. in Versandzentren und Distributionszentren, insbesondere in der Lebensmittel- und Getränkeindustrie sowie in der Gesundheitspflege, des Einzel- und/oder Großhandels sowie in der Fashion-Industrie, in der Produktionslogistik, in der Automobilindustrie, in der Kosmetikindustrie oder in ähnlichen Gebieten zum Einsatz kommen.

Vorzugsweise weisen die Packeinheiten 12 die Form von rechtwinkligen Parallelepipeden (z.B. Getränkekisten, Kartons, Six-Packs, etc.) auf, vgl. Fig. 2. Die Packeinheiten 12 können auf Ladungsträgern 13 bereitgestellt oder gepackt werden, wie z.B. auf Euro-, Düsseldorfer oder anderen Paletten 14. Es versteht sich, dass auch andere Ladungsträger 13 verwendet werden können, wie z.B. Tablare, Rollgitterwägen oder Ähnliches. Nachfolgend werden exemplarisch Paletten 14 betrachtet. Die Packeinheiten 12 werden, insbesondere typenrein, auf die Palette 14, insbesondere in Lagen 16, gepackt und gestapelt. Typenrein bedeutet, dass auf die Palette 14 ausschließlich Artikel eines (einzigen) Typs (z.B. Biersorte A, Limonade B, Wasser C, etc.) geladen sind bzw. werden. Es versteht sich, dass auch (z.B. lagenweise) gemischte Paletten 14 erzeugt werden können. Fig. 2 zeigt eine vollständig beladene Palette 14 mit einer Palettenladung 18, die durch exemplarisch sechs Lagen 16-1 bis 16-6 aus z.B. homogenen Packeinheiten 12 gebildet ist, die in einem z.B. verschachtelten Packmuster 19 angeordnet sind.

Das System 10 der Fig. 1 kann ein (Palettier/Depalettier-) System 20 zum roboterbasierten Bilden und/oder Auflösen einer vollständigen (Ladungsträger-) Lage 16 aus einer Vielzahl der einzelnen, insbesondere heterogenen, Packeinheiten 12 aufweisen. Das System 20 kann unabhängig vom System 10 implementiert und vertrieben werden.

Das System 20 weist auf: eine Vielzahl von fahrerlosen Transportfahrzeugen (FTF) 22 und eine Steuerung 24 für die FTF 22. Das System 20 kann ferner einen Palettier/Depalettier-Roboter 26 aufweisen. Es versteht sich, dass das System 20 und der Roboter 26 eingerichtet sein können: ausschließlich zum Palettieren; ausschließlich zum Depalettieren; oder zum Palettieren und Depalettieren.

Palettierungs- und Depalettierungsvorgänge unterscheiden sich im Wesentlichen lediglich in einer Richtung des Materialflusses. Beim Palettieren werden die Packeinheiten 12 zusammengeführt, um die Palettenladung 18 zu bilden, was üblicherweise in einem Warenausgangsbereich (nicht gezeigt in Fig. 1) des Systems 10 stattfindet, wohingegen die Packeinheiten 12 beim Depalettieren auseinander bewegt, d.h. vereinzelt, werden, was üblicherweise in einem Wareneingangsbereich (nicht gezeigt in Fig. 1) des Systems 10 stattfindet.

Zum effizienten Palettieren von homogenen und insbesondere (schwach) heterogenen, Packeinheiten 12 werden kommerziell erhältliche Packmuster-Generatoren 32 eingesetzt. Packmuster-Generatoren 32 sind Algorithmen bzw. Computerprogramme, die zum automatisierten und optimierten Bestimmen des Packmusters 19 eingesetzt werden. Die Steuerung 24 kann den Packmuster-Generator 32 umfassen. Der Packmuster-Generator 32 kann aber auch separat zur Steuerung 24 vorgesehen sein, um die Steuerung 24 mit einem externen Packmuster 19 zu versorgen.

Das Packmuster 19 bezeichnet eine spezifisch gewählte Anordnung und Positionierung der Packeinheiten 12 innerhalb einer (Ladungsträger-)Ladung, wie z.B. innerhalb der Palettenladung 18 der Fig. 2. Das Packmuster 19 kann wiederum aus mehreren vertikal übereinander angeordneten (2D- oder 3D-) Lagenmustern 34 gebildet werden, vgl. Fig. 2. Die Lagenmuster 34 stellen Schichten des Packmusters 19 bzw. der Palettenladung 18 dar.

Im Fall von "schwach heterogenen" Packeinheiten 12 erfolgt die Beladung der Palette 14 in Lagen 16 von (vorzugsweise) nahezu gleicher Höhe. Jede der Lagen 16 sollte eine Ladungsträgergrundfläche möglichst vollständig abdecken. Sämtliche Packeinheiten 12 der jeweiligen Lage 16 sollten eine einheitliche Höhe aufweisen, so dass sich auf ihrer Oberseite eine weitere Lage 16 anordnen lässt. Beim Übereinanderstapeln mehrerer Lagen 16 entsteht ein Lagenstapel, d.h. final die vollständige Palettenladung 18, wobei eine Packraumhöhe vorzugsweise maximal ausgeschöpft wird. Die Lagenmuster 34 der einzelnen Lagen 16 eines solchen Stapels können dabei identisch sein, sie können aber auch voneinander abweichen, beispielsweise weil sie auf unterschiedlichen Packeinheitenorientierungen beruhen oder weil sie unterschiedliche Packeinheitentypen enthalten.

Die Packeinheiten 12 können heterogen sein, indem sie unterschiedliche Abmessungen (insbesondere unterschiedliche Grundflächen bei vorzugsweise gleicher Höhe) aufweisen oder indem sie unterschiedliche Produkttypen (ggf. mit dennoch identischen Abmessungen) umfassen.

Beim Bestimmen des Packmusters 19 können Kriterien, wie z.B. Größe, Gewicht, Stapelfähigkeit, Druckfestigkeit und eine Entnahme- bzw. Depalettierreihenfolge berücksichtigt werden. Was so einfach klingt, bedarf aber eines ausgefeilten Softwarekonzepts. Die Packeinheiten 12 werden abhängig von ihrer Geometrie so dicht wie möglich angeordnet, um die Palette 14 so hoch wie möglich zu beladen bzw. zu packen, damit eine Palettenanzahl für jeden Versandauftrag minimiert werden kann. Gewicht und Stapelbarkeit der Packeinheiten 12 können genau berechnet und berücksichtigt werden, um die Waren unbeschädigt an ihr jeweiliges Ziel liefern zu können. Außerdem kann bei der Planung die spezifische Verteilung der Packeinheiten 12 bzw. Warengruppen in einer jeweiligen Filiale miteinbezogen werden, damit der Sortieraufwand dort ebenfalls minimiert wird. Weitere Anforderungen können sich aus den unterschiedlichen Verpackungs- und Produktmerkmalen für verschiedene Kunden, Branchen und Märkte ergeben.

Die oben genannten Kriterien verdeutlichen, wie schwierig es sein kann, eine stabile Lage 16 zu erzeugen. Eines der Probleme kann darin zu sehen sein, dass unterschiedliche Packeinheiten 12 von unterschiedlichen Bereitstellungsorten zusammengebracht werden müssen, um die mittels des Packmuster-Generators 32 geplante Lage 16 in der Realität zusammenzubauen. Die Bereitstellungsorte umfassen z.B. das Lager 28 und/oder die Produktion 30, vgl. Fig. 1. Das Lager 30 kann in unterschiedliche Bereiche bzw. Zonen unterteilt sein, z.B. gemäß einer ABC-Verteilung. Das Lager 30 kann unterschiedliche Lagertypen (z.B. Regallager für Paletten und/oder Behälter, Bodenlager, Karusselllager, Cubestorage-Lager, etc.) umfassen, die entfernt zueinander angeordnet sind.

Um die verschiedenen Packeinheiten 12 zusammenzubringen, d.h. am Lagenbildungsort zu versammeln, die für das jeweilige Lagenmuster 34 benötigt werden, eignen sich die FTF 22 besonders gut. Die FTF 22 sind autonom. Sie sind Roboter, die sich in ihrer Umgebung selbstständig (und) frei bewegen und agieren können. Man unterscheidet zwischen verschiedenen Autonomiegraden. Es gibt FTF 22, die ihren Fahrweg allein planen oder von einem übergeordneten Rechner (z.B. Flotten-Manager, MFR, etc.) vollständig vorgegeben bekommen. Je autonomer das FTF 22 ist, desto mehr Rechen- und Speicherkapazität muss das FTF 22 mit sich führen. Für die Bestimmung eines Fahrwegs kann es also ausreichen, dem FTF 22 einen Start- und Endpunkt vorzugeben, während das FTF die Strecke dazwischen selbst bestimmt. Auch die Kollisionsvermeidung kann in Echtzeit intern oder vorab extern (z.B. mittels eines Blockstrecken-Algorithmus) bestimmt werden. Es versteht sich, dass die FTF 22 Unstetigförderer darstellen, deren Fahrwege individuell und frei planbar sind. Auf eine Zwangsführung (z.B. mittels gitterartig angeordneten Wegpunkten (Rasternavigation) oder induktiven, kapazitiven oder optischen Leitlinien) kann verzichtet werden.

Fig. 3 zeigt eine Draufsicht auf ein schematisch dargestelltes (2D-) Lagenmuster 34 für eine Lage 16, die z.B. aus vier vertikalen Reihen aus Packeinheiten 12 gebildet ist, die von links nach rechts horizontal nebeneinander angeordnet sind. Die erste und dritte Reihe ist z.B. jeweils aus vier Packeinheiten 12 einer ersten Art gebildet. Die zweite und vierte Reihe ist z.B. jeweils aus sechs Packeinheiten 12 einer zweiten Art gebildet. Das Lagenmuster 34 definiert die Anordnung und Anzahl der Packeinheiten 12 der Lage 16. Jeder der Packeinheiten 12 der Lage 16 weist eine (Packeinheiten-spezifische) Position 36 innerhalb des Lagenmusters 34 auf, die in Fig. 3 z.B. durch einen Punkt innerhalb der jeweiligen Packeinheit 12 angedeutet ist. Die packeinheitenspezifische Position 36 kann eine (relative) 2D- oder 3D-Position sein, die verdeutlicht, wo die jeweilige Packeinheit 12 innerhalb ihrer Lage 16 positioniert ist. Die Position 36 kann nicht nur eine Ortskoordinate, sondern auch eine Ausrichtung im Raum und/oder eine Abmessung der jeweiligen Packeinheit 12 umfassen. Die Packeinheiten-spezifische Position 36 kann in einem Schwerpunkt der Packeinheit 12 verankert sein, wie es in Fig. 3 exemplarisch angedeutet ist.

In der Fig. 3 ist die Lage 16 vollständig erzeugt, indem die Packeinheiten 12 an den ihnen jeweils zugeordneten Positionen positioniert sind. Die Fig. 3 veranschaulicht einen Zustand, wo die Lage 16 aufgelöst werden soll, indem die Packeinheiten 12 auseinander bewegt, d.h. vereinzelt, werden, wie es durch Pfeile 38 angedeutet ist. Die Vereinzelung kann in jede beliebige Richtung erfolgen. Jede der Packeinheiten 12 der Lage 16 der Fig. 3 kann auf einem individuell bestimmbaren (Fahr-)Weg an ihr individuell bestimmbares Ziel (z.B. an einen gewünschten Lagerort, einen Kommissionierplatz, etc.) bewegt werden, wobei für den entsprechenden Transport jeweils mindestens ein FTF 22 eingesetzt wird. Die Anzahl der FTF 22, die für einen Transport benötigt werden, kann von der Größe (relativ zum Fahrzeug) und einem Gewicht der Packeinheit 12 abhängen. In der Regel gilt: je schwerer und größer die Packeinheit 12 ist, desto mehr FTF 22 werden zum (gleichzeitigen) Transport benötigt. In diesen Fällen ist es z.B. möglich, dass die entsprechende Packeinheit 12 innerhalb der Lage 16 bzw. des Lagenmusters 34 virtuell in eine entsprechende Anzahl von Unter(pack)einheiten unterteilt wird, wobei jeder Untereinheit eines der FTF 22 zugeordnet wird und wobei jede Untereinheit eine eigene Position 36 aufweist. Bevorzugt ist aber eine 1:1-Zuordnung zwischen der Packeinheit 12 und dem FTF 22.

Fig. 4 zeigt eine perspektivische Ansicht eines Palettier/Depalettier-Systems 20 gemäß der Fig. 1. Das System 20 der Fig. 4 weist eine Vielzahl von FTF 22 und einen Palettier/Depalettier-Roboter 26 auf. Der Roboter 26 ist exemplarisch als Portalroboter 40 mit einem Gestell 42 implementiert, das einen quaderförmigen Arbeitsraum 42 definiert, innerhalb dem ein Lastaufnahmemittel (LAM) 44 beweglich ist, das zum umfänglichen Greifen einer vollständigen Lage 16 eingerichtet sein kann.

Durch den Arbeitsraum 42 kann ein Zuführ/Abführ-Förderer 46 für leere, volle oder teilweise beladene Ladungsträger 13 verlaufen. Der Arbeitsraum 42 ist so groß, dass eine Gruppe von FTF 22, die zum Bilden oder Aufnehmen einer vollständigen Lage 16 benötigt werden, gleichzeitig innerhalb des Arbeitsraums 42 verweilen kann, während das LAM 44 die Lage 16 von den FTF 22 abnimmt (Palettierung) oder auf ihnen absetzt (Depalettierung).

In der Fig. 4 ist exemplarisch ein Depalettierungsvorgang gezeigt, bei dem die FTF 22 (einzeln) z.B. von links und unten in den Arbeitsraum 42 eindringen, sich zur Aufnahme einer Palettenlage, die z.B. aus vier Packeinheiten 12 besteht, gruppieren und den Arbeitsraum 42 dann (z.B. einzeln) nach rechts verlassen. Die Fahrbereiche der FTF sind in der Fig. 4 durch Strichlinien und Pfeile angedeutet. Es versteht sich, dass die Fahrtrichtung der FTF 22 im Falle einer Palettierung genau umgekehrt sein könnte. Ein Palettierungsvorgang ist üblicherweise aber etwas komplexer als ein Depalettierungsvorgang, weil die Packeinheiten 12 in der Mitte der Lage 16 - im Vergleich zu Packeinheiten 12 am äußeren Rand - innerhalb einer Lagenformation der FTF 22 zuerst positioniert werden müssen, wie es unten noch näher erläutert werden wird. Diese erfordert einen gewissen Synchronisierungsaufwand. Außerdem sind die Fahrwege der FTF 22 so aufeinander abzustimmen, dass sich die Packeinheiten 12 während der Navigation in die gewünschte Endposition, d.h. in die packeinheitenspezifische Position 36, nicht berühren, aber am Ende des Fahrwegs so dicht wie möglich, insbesondere in (flächigem) Kontakt miteinander, positioniert sind, um eine abstandlose Formation zu bilden. Es versteht sich, dass die Lage 16 aber auch mit Abständen zwischen den Packeinheiten 12 gebildet werden kann.

Fig. 5 veranschaulicht exemplarisch eine Gruppe von depalettierenden FTF 22 kurz nachdem sie den Arbeitsraum 42 der Fig. 4 verlassen haben. Jedes der FTF 22 trägt eine der Packeinheiten 12. In der Fig. 5 trägt z.B. jedes der FTF 22 genau eine der Packeinheiten 12. Ferner ist in Fig. 5 zu sehen, dass ein Fußabdruck von jedem der FTF 22 kleiner als ein Fußabdruck der zugeordneten Packeinheit 22 ist. Der Fußabdruck entspricht einem Umriss (d.h. einer projizierten Fläche), wenn man ein Objekt senkrecht von oben betrachtet. Dies gilt vorzugsweise generell, damit die FTF 22 bei der Aufnahme und Abgabe einer vollständigen Lage 16 einander nicht berühren und somit nicht miteinander kollidieren. Dies bedeutet mit anderen Worten, dass die FTF 22 seitlich nicht über die Packeinheiten 12 hinausreichen, die auf sie geladen sind. Vorzugsweise ist jedes der FTF 22 mit Mitteln (nicht dargestellt) versehen, um die Packeinheiten 12 während eines Transports, d.h. während einer Fahrt in eine oder aus einer Lagenformation, zu fixieren. Die Mittel können (Transport-)Flächen mit haftreibungsverstärkenden Eigenschaften, Klammern, von unten agierende Haltestifte oder Ähnliches sein.

Fig. 6 veranschaulicht ein Verfahren 100 zum Bilden bzw. Auflösen einer vollständigen Ladungsträger-Lage 16, die aus einer Vielzahl von einzelnen, insbesondere heterogenen, Packeinheiten 12 besteht, wie oben bereits erläutert. Das Verfahren 100, das insbesondere mit einem System 10 und/oder 20 gemäß der oben beschriebenen Art durchführbar ist, weist mehrere Schritte auf.

In einem Schritt S102 werden vorgesehen: eine Vielzahl von FTF 22, eine Vielzahl von Packeinheiten 12 und ein Lagenmuster 34 für die zu handhabende Lage 16. Das Lagenmuster 34 kann durch die Steuerung 24 erzeugt werden oder von dem Packmuster-Generator 32 durch die Steuerung 24 empfangen werden, wenn der Generator 32 nicht in die Steuerung 24 integriert ist. Die Lage 16 gibt die Anzahl bzw. Vielzahl der Packeinheiten 12 vor, aus der sie gebildet wird. Die Packeinheiten 12 wiederum können festlegen, wie viele der FTF 22 für deren Transport benötigt werden, wobei üblicherweise eine der Packeinheiten 12 von einem der FTF 12 transportiert wird. Generell wird davon ausgegangen, dass alle FTF 12 vom gleichen Typ sind. Es können aber auch unterschiedliche FTF-Typen eingesetzt werden, insbesondere um das 1:1-Verhältnis zwischen den FTF 12 und den Packeinheiten 22 der jeweiligen Lage 16 aufrechtzuerhalten. Für schwerere und/oder größere Packeinheiten 12 könnten größere FTF 12 eingesetzt werden. Das 1:1-Verhältnis kann eine Planung der FTF-spezifischen Fahrwege erleichtern, weil in diesem Fall weniger individuelle Fahrwege geplant werden müssen. Eine Anzahl der FTF 22 ist also vorzugsweise größer oder gleich einer Anzahl der Packeinheiten 12 der Lage 16.

Das Lagenmuster 34 kann vorab in einem separaten Schritt vorgesehen werden, um die Anzahl der benötigten FTF 22 zu bestimmen. Das Bestimmen und Vorsehen der Anzahl benötigter FTF 22 kann auf einer zusätzlichen Analyse der Packeinheiten 12, die im Lagenmuster 34 enthalten sind, in Bezug auf deren jeweiliges Gewicht und jeweilige Abmessung basieren. Diese Informationen sind vorzugsweise ebenfalls in dem Lagenmuster 34 enthalten, ebenso wie optionale Lager- und/oder Ziel- bzw. Verwendungsorte der Packeinheiten 12. Jeder Packeinheit 12 kann eine Reihenfolgenummer zugewiesen werden, so dass innere Packeinheiten 12 zuerst formiert werden beim Palettieren.

In einem Schritt S104 wird, durch die Steuerung 24, jeder der Packeinheiten 12 der Lage 16 (mindestens) eines der FTF 22 zugeordnet. Diese Zuordnung kann z.B. in Form einer Tabelle (nicht dargestellt) in einer Speichereinheit (nicht dargestellt) der Steuerung 24 gespeichert werden. Auch das Lagenmuster 34 kann z.B. in Form einer Tabelle, insbesondere in der gleichen Tabelle, gespeichert werden. Vorzugsweise wird jeder der Packeinheiten 12 der Lage 16 ein anderes der FTF 22 zugeordnet.

In einem Schritt S106 bestimmt die Steuerung 24 die packeinheitenspezifische Position 36 für jede der Packeinheiten 12 basierend auf bzw. aus dem Lagenmuster 34. In einem Schritt S108 gibt die Steuerung 24 jedem der zugeordneten FTF 12 die entsprechende packeinheitenspezifische Position 36 als eine End/Start-Position eines FTF-spezifisch zu bestimmenden Fahrwegs vor, so dass jede der Packeinheiten 12 der Lage 16 durch das jeweils zugeordnete FTF 22 an die packeinheitenspezifische Position 36 bewegt wird bzw. von der packeinheitenspezifischen Position 36 weg bewegt wird, während die Lage 16 gebildet bzw. aufgelöst wird.

Die Bestimmung des FTF-spezifischen Fahrwegs, der die packeinheitenspezifische Position 36 als eine End- bzw. Start-Position umfasst, kann ebenfalls von der Steuerung 24 durchgeführt werden, die in diesem Fall vorzugsweise mit einem entsprechenden Routenerzeugungsmodul - und ggf. auch mit einem Kollisionsvermeidungsmodul - versehen ist, so dass die gesamte Rechenlast bei der Steuerung 24 liegt. Bevorzugt ist es aber, dass entweder die FTF 22 selbst oder ein FTF-Flotten-Manager die FTF-spezifischen Fahrwege (Routen) bestimmt. In diesem Fall reicht es aus, dass die Steuerung 24 die packeinheitenspezifische Position 36 als die End/Start-Position an die entsprechende Entität kommuniziert, die dann die Fahrwege FTF-spezifisch planen kann. Es versteht sich, dass das System 20 - und insbesondere die Steuerung 24 - mit entsprechenden Schnittstellen und Kommunikationsmitteln versehen ist.

Eine Besonderheit beim Bilden einer Lage 16 ist darin zu sehen, dass die Fahrwege so zu planen sind, dass Packeinheiten 12, die sich im Inneren der Lage 16 befinden, zuerst an ihrer Position 36 ankommen. Es ist also eine gewisse Reihenfolge zu beachten.

Des Weiteren sind die Fahrwege so zu planen, dass die Packeinheiten 12 in einer gewünschten Orientierung an ihren Positionen 36 zum Stehen kommen.

Die Fahrwege sind so zu planen, dass die Packeinheiten 12 möglichst dicht, vorzugsweise ohne Abstand dazwischen, in der gewünschten Lagenformation positioniert werden. Es kann eine gewisse Orchestrierung erforderlich sein.

Bei der Planung der Fahrwege können die Lagerorte bei der Lagenbildung als Startpunkte der Fahrwege und beim Auflösen der Lage als Zielpunkte relevant sein. Diese Informationen können im Lagenmuster 34 bereits hinterlegt sein oder von einem Lagerverwaltungsrechner (LVR) oder einem Materialflussrechner (MFR) abgerufen werden.

Die Steuerung 24 ist eingerichtet, entsprechende Informationen aus dem Lagenmuster 34 zu extrahieren, von dem Lagerverwaltungsrechner oder Materialflussrechner abzurufen und/oder bei der Planung der Fahrwege zu berücksichtigen bzw. an die planende Entität zu übermitteln.

Als Nächstes werden Hardware-Konfigurationen der Steuerung 24, des Palettier/Depalettier-Roboters 26 und/oder der FTF 22 gemäß den oben beschriebenen Ausführungsformen erläutert. Die Steuerung 24 kann als Hardware implementiert sein, die jede Funktion der Steuerung 24 gemäß den Ausführungsformen implementiert und die insbesondere das Lagenmuster 34 analysiert, die Anzahl der FTF 22 und die Positionen 36 extrahiert sowie ggf. die Fahrwege erzeugt.

Jede der Funktionen der Steuerung 24, des Palettier/Depalettier-Roboters 26 und/oder der FTF 22 könnte unter Verwendung einer Verarbeitungsschaltung implementiert werden. In dem Fall, wo eine zweckgebundene Hardware verwendet wird, kann eine zweckgebundene Verarbeitungsschaltung einer einzelnen Schaltung, einer zusammengesetzten Schaltung, einer anwendungsspezifisch integrierten Schaltung (ASIC), einer kundenspezifisch programmierbaren Gate-Anordnung (FPGA), oder eine Kombination davon, entsprechend. Die Funktionen der Steuerung 24 könnten jeweils durch eine Verarbeitungsschaltung implementiert werden oder sie könnten kollektiv durch eine Verarbeitungsschaltung implementiert werden.

Des Weiteren kann die Steuerung 24 durch einen Prozessor und eine Speichervorrichtung implementiert werden. Der Prozessor könnte ein arithmetisches Mittel sein, wie zum Beispiel eine Arithmetikeinheit, ein Mikroprozessor, ein Mikrocomputer, eine zentrale Verarbeitungseinheit (CPU) oder ein digitaler Signalprozessor (DSP). Außerdem umfassen Beispiele der Speichervorrichtung nichtflüchtige oder flüchtige Halbleiterspeicher, wie zum Beispiel einen Direktzugriffsspeicher (RAM), einen Festwertspeicher (ROM), einen Flash-Speicher, ein löschbar programmierbares ROM (EPROM) und ein elektrisches EPROM (EEPROM (eingetragenes Warenzeichen)).

In einem Fall, wo der Prozessor und die Speichervorrichtung verwendet werden, kann jede der Funktionen der Steuerung 24 durch Software, einer Firmware, oder eine Kombination davon, implementiert sein. Die Software oder Firmware kann als ein Programm geschrieben und in der Speichervorrichtung gespeichert sein. Der Prozessor kann derartige Programme lesen, die in der Speichervorrichtung gespeichert sind, und kann sie ausführen. Diese Programme können einen Computer bzw. Rechner dazu veranlassen, Prozeduren und Verfahren für die jeweiligen Funktionen der Steuerung 24, des Palettier/Depalettier-Roboters 26 und/oder der FTF 22 auszuführen.

Einige der Funktionen der der Steuerung 24, des Palettier/Depalettier-Roboters 26 und/oder der FTF 22 könnten durch Hardware implementiert werden und andere Funktionen davon könnten durch Software oder eine Firmware implementiert werden. Zum Beispiel könnten die Funktionen der Steuerung 24 unter Verwendung einer zweckgebundenen Hardware implementiert werden, und die Funktionen der FTF 22 könnten unter Verwendung eines Prozessors einer Speichervorrichtung implementiert werden.

Die bei den obigen Ausführungsformen dargestellten Konfigurationen zeigen Beispiele, und ist es möglich, die Konfigurationen mit einem anderen bekannten Verfahren zu kombinieren oder die Ausführungsformen miteinander zu kombinieren, und es ist auch möglich, die Konfigurationen teilweise wegzulassen oder zu ändern, ohne vom Umfang der vorliegenden Offenbarung abzuweichen.

Ferner versteht es sich, dass das System 20 ein Vision-System (Kamerasystem) aufweisen kann, insbesondere um die Positionen der FTF 22 während der Aufnahme oder Abgabe der Lage 16 zu verifizieren. Mittels Bildverarbeitung können so Korrektur-Befehle erzeugt werden, um eine Feinpositionierung der FTF 22 vorzunehmen.
- 10: (Intralogistik-) System
- 12: Packeinheit
- 13: Ladungsträger
- 14: Palette
- 16: Lage
- 18: Palettenladung
- 19: Packmuster
- 20: System zum Bilden/Auflösen von Lagen
- 22: FTF (fahrerloses Transportfahrzeug)
- 24: (FTF-) Steuerung
- 26: Palettier/Depalettier-Roboter
- 28: Lager
- 30: Produktion
- 32: Packmuster-Generator
- 34: Lagenmuster
- 36: Position, packeinheitenspezifisch
- 38: Pfeil (Fahrweg)
- 40: Portalroboter
- 42: Arbeitsraum
- 44: Lastaufnahmemittel (LAM)
- 46: Zuführ/Abführ-Förderer

## Patentansprüche

1. System (10; 20) zum Bilden bzw. Auflösen einer vollständigen Ladungsträger-Lage (16) aus einer Vielzahl von einzelnen, insbesondere heterogenen, Packeinheiten (12), das aufweist:
eine Vielzahl von FTF (22); und
eine Steuerung (24), die eingerichtet ist:
jeder der Packeinheiten (12) der Lage (16) eines der FTF (22) zuzuordnen;
für jede der Packeinheiten (12) der Lage (16) eine Packeinheiten-spezifische Position (36) basierend auf einem vorab für die Lage (16) festgelegten Lagenmuster (34) zu bestimmen; und
jedem der FTF (22) die Packeinheiten-spezifische Position (36) als eine End/Start-Position eines FTF-spezifischen Fahrwegs vorzugeben, so dass jede der Packeinheiten (12) der Lage (16), durch das jeweils zugeordnete FTF (22), an die bzw. von der Packeinheiten-spezifischen Position (36) bewegt wird, wenn die Lage (16) gebildet bzw. aufgelöst wird.

2. System (10; 20) nach Anspruch 1, das ferner einen Palettier/Depalettier-Roboter (26) aufweist.

3. System (10; 20) nach Anspruch 2, wobei ein Lastaufnahmemittel des Palettier/Depalettier-Roboters (26) eingerichtet ist, alle Packeinheiten (12) der Lage (16) gleichzeitig zu greifen.

4. System (10; 20) nach Anspruch 2 oder 3, wobei der Palettier/Depalettier-Roboter (26) ein Portalroboter ist.

5. System (20) nach einem der Ansprüche 2 bis 4, das ferner einen Abführ/Zuführ-Förderer (46) für den Ladungsträger (13) umfasst, der durch einen Arbeitsraum des Palettier/Depalettier-Roboters (26) hindurch verläuft, wobei der Arbeitsraum ferner einen Bereich einschließt, innerhalb dem die Vielzahl der FTF positionierbar ist, um die Lage (16) abzugeben bzw. aufzunehmen.

6. System (10) nach einem der Ansprüche 1 bis 5, das ferner ein Lager (28) und/oder eine Produktion (30) aufweist, von wo die Packeinheiten (12) der Lage durch die FTF (22) abgeholt werden bzw. wohin die Packeinheiten (12) der Lage (12) gebracht werden, wobei vorzugsweise das Lager und/oder die Produktion entfernt zum Palettier/Depalettier-Roboter (26) angeordnet sind.

7. System (10; 20) nach einem der Ansprüche 1 bis 6, wobei die Steuerung (24) ferner eingerichtet ist, jeden der FTF-spezifischen Fahrwege vorab zu bestimmen.

8. System (10; 20) nach einem der Ansprüche 1 bis 7, wobei die Steuerung (24) ferner eingerichtet ist, das Lagenmuster (34) zum Bilden der Lage (16) aus den Packeinheiten (12) festzulegen.

9. System (10; 20) nach einem der Ansprüche 1 bis 8, wobei ein Fußabdruck von jeder der Packeinheiten (12) der Lage (16) grösser oder gleich einem Fußabdruck des oder der zugeordneten FTF (22) ist.

10. Verfahren (100) zum Bilden bzw. Auflösen einer vollständigen Ladungsträger-Lage (16) aus einer Vielzahl von einzelnen, insbesondere heterogenen, Packeinheiten (12), wobei das Verfahren, das insbesondere mit einem System (20) gemäß einem der vorgehenden Ansprüche durchgeführt wird, die Schritte aufweist:
Vorsehen (S102) einer Vielzahl von FTF (22), der Vielzahl von Packeinheiten (12) der Lage (16) und eines vorab für die Lage (16) festgelegten Lagenmusters (34), wobei eine Anzahl der FTF (22) insbesondere größer oder gleich einer Anzahl der Packeinheiten (12) der Lage (16) ist;
Zuordnen (S104) von einem der FTF (22) zu jeder der Packeinheiten (12) der Lage (16), wobei jeder der Packeinheiten (12) der Lage (16) ein anderes der FTF (22) zugeordnet ist;
Bestimmen (S106) einer Packeinheiten-spezifischen Position (36) für jede der Packeinheiten (12) basierend auf dem Lagenmuster (34); und
Vorgeben (S108) der Packeinheiten-spezifischen Position (36) als eine End/Start-Position eines FTF-spezifischen Fahrwegs für jedes der zugeordneten FTF (22), wobei jede der Packeinheiten (12) der Lage (16), durch das jeweils zugeordnete FTF (22), an die bzw. von der Packeinheiten-spezifischen Position (36) bewegt wird, während die Lage (16) gebildet bzw. aufgelöst wird.
